# EUROPEAN PATENT APPLICATION

(11) **EP 4 835 273 A1**
(43) Date of publication of application: **04.11.2026**
(21) Application number: 26174034.4
(22) Date of filing: 22.04.2026
(51) Int. Cl.: F02B 75/40, F02B 77/00, F02B 77/14

(54) **INTERNAL COMBUSTION ENGINE WITH IMPROVED EFFICIENCY**

(30) Priority: 28.04.2025 GB 202506330
(71) Applicant: Clifford, John, Faringdon, Oxfordshire SN7 7NQ (GB)
(72) Inventor: Clifford, John, Faringdon, Oxfordshire SN7 7NQ (GB)
(74) Representative: Bryers Intellectual Property Ltd

(57) **Abstract**

Apparatus (100; 1-100, 2-100) for installation within, and a method of installing the apparatus within, an internal combustion engine that comprises a cylinder (103) in which a piston (101) that is operatively connected to a crankshaft (102) is slidable. Apparatus (2-100) comprising a permanent magnet (110) locatable at a lower end (III) of the piston, and two permanent magnets (113, 117) locatable on a counterweight (115) of the crankshaft with an outer face (116, 119) thereof arranged for facing the lower end of the piston. Apparatus (1-100) comprising an electromagnet (105) locatable at an upper end (106) of the cylinder and operatively connectable to a control arrangement (120), and a permanent magnet (107) locatable at an upper end (108) of the piston with an upper face (109) thereof facing the electromagnet. An internal combustion engine provided with the apparatus. A vehicle comprising an internal combustion engine provided with the apparatus.

## Description

### Field of the Invention

The present invention relates to improving engine efficiency, and in particular to reducing fuel consumption of an internal combustion engine.

### Background of the Invention

Internal combustion engines are used in various applications, including within the manufacturing and automobile industries.

Traditionally, internal combustion engines for vehicles have been designed to run on hydrocarbon-based fuels, such as gasoline (usable in spark-ignition engines), diesel (usable in compression-ignition engines) and natural gas (usable as a main or secondary fuel), although more recently there has been interest in developing renewable and alternative engine fuels, for example biofuels (biodiesel, bioethanol, biogas), whether usable as a main or a secondary fuel, as well as a focus on transitioning to electrically powered engines, with a view to reducing reliance on fossil fuels and reducing fuel consumption for environmental benefit. A problem with some engines designed to achieve this aim is that they add weight, which can be detrimental to overall power requirements and tyre wear, they involve the use of unfamiliar technology, which can be detrimental to uptake, and are not retrofittable, which is disadvantageous to existing vehicles.

It is an object of the present invention to provide apparatus and a method for reducing fuel consumption of an internal combustion engine that improves on existing engine designs.

### Summary of the Invention

According to a first aspect there is provided an internal combustion engine, comprising: a cylinder, a piston slidable within the cylinder between a top position and a bottom position, and a crankshaft having a drive direction of rotation, the piston operatively connected to the crankshaft; the internal combustion engine further comprising: (a) a first permanent magnet located at a lower end of the piston, with a lower face of the first permanent magnet facing towards a lower end of the cylinder, the lower face of the first permanent magnet having one of a north polarity and a south polarity; (b) a second permanent magnet located at a first, leading region of a counterweight of the crankshaft for attracting the first permanent magnet, an outer face of the second permanent magnet having an opposite one of a north polarity and a south polarity to the lower face of the first permanent magnet; and (c) a third permanent magnet located at a second, trailing region of the counterweight of the crankshaft for repelling the second permanent magnet, an outer face of the third permanent magnet having an opposite one of a north polarity and a south polarity to the outer face of the second permanent magnet.

Magnetic attraction between the second permanent magnet (located at the first, leading region of a counterweight of the crankshaft) and the first permanent magnet (located at the lower end of the piston) assists the travel of the piston away from the head of the cylinder downwards towards the bottom position. Magnetic repulsion between the third permanent magnet (located at the second, trailing region of a counterweight of the crankshaft) and the second permanent magnet (located at the lower end of the piston) assists the travel of the piston back towards the head of the cylinder, upwards toward the top position. This serves to improve fuel efficiency of the internal combustion engine.

In a specific example, the internal combustion engine further comprises (d) an electromagnet located at an upper end of the cylinder; (e) a fourth permanent magnet located at an upper end of the piston, an upper face of the fourth permanent magnet facing the electromagnet and having one of a north polarity and a south polarity; and (f) a control arrangement operatively connected to the electromagnet for selectively activating the electromagnet in at least one of a north polarity mode and a south polarity mode, for repelling the fourth permanent magnet as the piston approaches the top position within the cylinder.

Magnetic repulsion between the electromagnet (located at the upper end of the cylinder) and the fourth permanent magnet (located at the upper end of the piston) assists the travel of the piston away from the head of the cylinder, downwards towards the bottom position. This serves to improve fuel efficiency of the internal combustion engine.

In an example, the lower face of the first permanent magnet has an opposite one of a north polarity and a south polarity to the upper face of the fourth permanent magnet.

In an example, the internal combustion engine comprises at least one further cylinder and respective further piston, the further piston operatively connected to the crankshaft and slidable within the further cylinder between a top position and a bottom position; and the internal combustion engine further comprises (g) a second electromagnet located at an upper end of the further cylinder; (h) a fifth permanent magnet located at an upper end of the further piston , an upper face of the fifth permanent magnet facing the second electromagnet and having one of a north polarity and a south polarity; (i) a sixth permanent magnet located at a lower end of the further piston, opposite the upper end, a lower face of the sixth permanent magnet having one of a north polarity and a south polarity; (j) a seventh permanent magnet located at a first, leading region of a respective further counterweight of the crankshaft, an outer face of the seventh permanent magnet having an opposite one of a north polarity and a south polarity to the lower face of the sixth permanent magnet; and (k) an eighth permanent magnet located at a second, trailing region of the further counterweight of the crankshaft, an outer face of the eighth permanent magnet having an opposite one of a north polarity and a south polarity to the outer face of the seventh permanent magnet; in which (l) the second electromagnet is operatively connected to a second control arrangement for selectively activating the second electromagnet in at least one of a north polarity mode and a south polarity mode, for repelling the fifth permanent magnet as the further piston approaches the top position within the further cylinder.

In an example, the second control arrangement and the control arrangement are comprised by a centralised control arrangement.

In an example, the lower face of the sixth permanent magnet has an opposite one of a north polarity and a south polarity to the upper face of the fifth permanent magnet. In an example, the lower face of the first permanent magnet has an opposite one of a north polarity and a south polarity to the upper face of the fourth permanent magnet, and the upper face of the fifth permanent magnet has the same one of a north polarity and a south polarity as the upper face of the fourth permanent magnet.

In a specific example, the internal combustion engine is a four-stroke engine. In another specific example, the internal combustion engine is a two-stroke engine. In a specific example, the internal combustion engine is configured to use a fuel that is, or that comprises, one of: gasoline, bioethanol, diesel, biodiesel.

According to a second aspect there is provided a vehicle, the vehicle comprising an internal combustion engine according to the first aspect. In a specific example, the vehicle is an automobile.

According to a third aspect, there is provided apparatus for installation within an internal combustion engine, the apparatus comprising: (a) a first permanent magnet for location at a lower end of a piston of the internal combustion engine, the piston slidable within a cylinder of the internal combustion engine between a top position and a bottom position and the piston operatively connected to a crankshaft of the internal combustion engine, the crankshaft having a drive direction of rotation, with a lower face of the first permanent magnet facing towards a lower end of the cylinder, the lower face of the first permanent magnet having one of a north polarity and a south polarity; (b) a second permanent magnet for location at a first, leading region of a counterweight of the crankshaft for attracting the first permanent magnet, an outer face of the second permanent magnet having an opposite one of a north polarity and a south polarity to the lower face of the first permanent magnet; and (c) a third permanent magnet for location at a second, trailing region of the counterweight of the crankshaft for repelling the second permanent magnet, an outer face of the third permanent magnet having an opposite one of a north polarity and a south polarity to the outer face of the second permanent magnet.

In an example, the apparatus further comprises: (d) an electromagnet for location at an upper end of the cylinder; (e) a fourth permanent magnet for location at an upper end of the piston, an upper face of the fourth permanent magnet facing the electromagnet and having one of a north polarity and a south polarity; and (f) a control arrangement operatively connected to the electromagnet for selectively activating the electromagnet in at least one of a north polarity mode and a south polarity mode, for repelling the fourth permanent magnet as the piston approaches the top position within the cylinder.

According to a fourth aspect there is provided a method of installing apparatus within an internal combustion engine, the internal combustion engine comprising a cylinder in which a piston is slidable between a top position and a bottom position, the piston operatively connected to a crankshaft having a drive direction of rotation, the method comprising: (i) locating a first permanent magnet at a lower end of the piston, with a lower face of the first permanent magnet facing towards a lower end of the cylinder, the lower face of the first permanent magnet having one of a north polarity and a south polarity; (ii) locating a second permanent magnet at a first, leading region of a counterweight of the crankshaft for attracting the first permanent magnet, an outer face of the second permanent magnet having an opposite one of a north polarity and a south polarity to the lower face of the first permanent magnet; and (iii) locating a third permanent magnet at a second, trailing region of the counterweight of the crankshaft for repelling the second permanent magnet, an outer face of the third permanent magnet having an opposite one of a north polarity and a south polarity to the outer face of the second permanent magnet.

In an example, the method further comprises: (iv) locating an electromagnet at an upper end of the cylinder; (v) locating a fourth permanent magnet at an upper end of the piston with an upper face of the fourth permanent magnet acing the electromagnet, the upper end of the fourth permanent magnet having one of a north polarity and a south polarity; and (vi) operatively connecting the electromagnet to a control arrangement, the control arrangement for selectively activating the electromagnet in at least one of a north polarity mode and a south polarity mode, for repelling the fourth permanent magnet as the piston approaches the top position within the cylinder.

According to a fifth aspect, there is provided apparatus for installation within an internal combustion engine, the apparatus comprising: (a) an electromagnet for location at an upper end of a cylinder of the internal combustion engine, in which a piston of the internal combustion engine is slidable between a top position and a bottom position, the piston operatively connected to a crankshaft of the internal combustion engine, the crankshaft having a drive direction of rotation, (b) a permanent magnet for location at an upper end of the piston, an upper face of the permanent magnet facing the electromagnet and having one of a north polarity and a south polarity; and (c) a control arrangement operatively connected to the electromagnet for selectively activating the electromagnet in at least one of a north polarity mode and a south polarity mode, for repelling the permanent magnet as the piston approaches the top position within the cylinder.

According to a sixth aspect, there is provided a method of installing apparatus within an internal combustion engine, the internal combustion engine comprising a cylinder in which a piston is slidable between a top position and a bottom position, the piston operatively connected to a crankshaft having a drive direction of rotation, the method comprising: (a) locating an electromagnet at an upper end of the cylinder (b) locating a permanent magnet at an upper end of the piston, an upper face of the permanent magnet facing the electromagnet and having one of a north polarity and a south polarity; and (c) operatively connecting the electromagnet to a control arrangement, the control arrangement for selectively activating the electromagnet in at least one of a north polarity mode and a south polarity mode, for repelling the permanent magnet as the piston approaches the top position within the cylinder.

According to a seventh aspect there is provided a vehicle comprising an internal combustion engine in which apparatus according to the sixth aspect is installed. In an example, the vehicle is an automobile.

Apparatus disclosed herein for installation within an internal combustion engine may be installed as an original or retrofit installation.

Disclosed herein is apparatus for installation within, and a method of installing the apparatus within, an internal combustion engine that comprises a cylinder in which a piston that is operatively connected to a crankshaft is slidable. Apparatus comprising a permanent magnet locatable at a lower end of the piston, and two permanent magnets locatable on a counterweight of the crankshaft with an outer face thereof arranged for facing the lower end of the piston is disclosed herein. Apparatus comprising an electromagnet locatable at an upper end of the cylinder and operatively connectable to a control arrangement, and a permanent magnet locatable at an upper end of the piston with an upper face thereof facing the electromagnet is disclosed herein. An internal combustion engine provided with the apparatus, and a vehicle comprising an internal combustion engine provided with the apparatus, are disclosed herein.

Further particular and preferred aspects of the present invention are set out in the dependent claims.

### Brief Description of the Drawings

The present invention will now be more particularly described, with reference to the accompanying drawings, in which:
**Figure 1** illustrates features of a cylinder, piston and crankshaft of an internal combustion engine, according to a first example;
**Figure 2** illustrates the cylinder, piston and crankshaft shown in **Figure 1** in a first relative arrangement, with the piston at a top position within the cylinder;
**Figure 3** illustrates the cylinder, piston and crankshaft shown in **Figure 1** in a second relative arrangement, after travel of the piston, during an intake phase; from the top position within the cylinder shown in **Figure 2** to a bottom position within the cylinder;
**Figure 4** illustrates the cylinder, piston and crankshaft shown in **Figure 1** in a third relative arrangement, before travel of the piston from the bottom position shown in Figure 3 to the top position shown in **Figure 2****;**
**Figure 5** illustrates the cylinder, piston and crankshaft shown in **Figure 1** in a fourth arrangement, after travel of the piston, during a compression phase, from the bottom position shown in **Figure 3** to the top position shown in **Figure 2****;**
**Figure 6** illustrates the cylinder, piston and crankshaft shown in **Figure 1** in the third relative arrangement, after travel of the piston, during an ignition phase; from the top position within the cylinder shown in **Figure 2** to the bottom position within the cylinder shown in **Figure 3****;**
**Figure 7** illustrates the cylinder, piston and crankshaft shown in **Figure 1** in the first relative arrangement, after travel of the piston, during an exhaust phase; from the bottom position within the cylinder shown in **Figure 6** to the top position within the cylinder; and
**Figures 8****,** **9** **and** **10** illustrate apparatus for installation in an internal combustion engine.

### Description

Example embodiments are described below in sufficient detail to enable those of ordinary skill in the art to embody and implement the apparatus, systems and processes described herein. It is to be understood that embodiments can be provided in many alternate forms and the invention should not be construed as limited to the specific embodiments and examples set forth herein but by the scope of the appended claims.

Apparatus for, and a method of, reducing fuel consumption of an internal combustion engine, according to a first specific example, will now be described with reference to the accompanying Figures. An internal combustion engine comprising the apparatus according to the first specific example, and a method for providing the same, will also now be described with reference to the accompanying Figures.

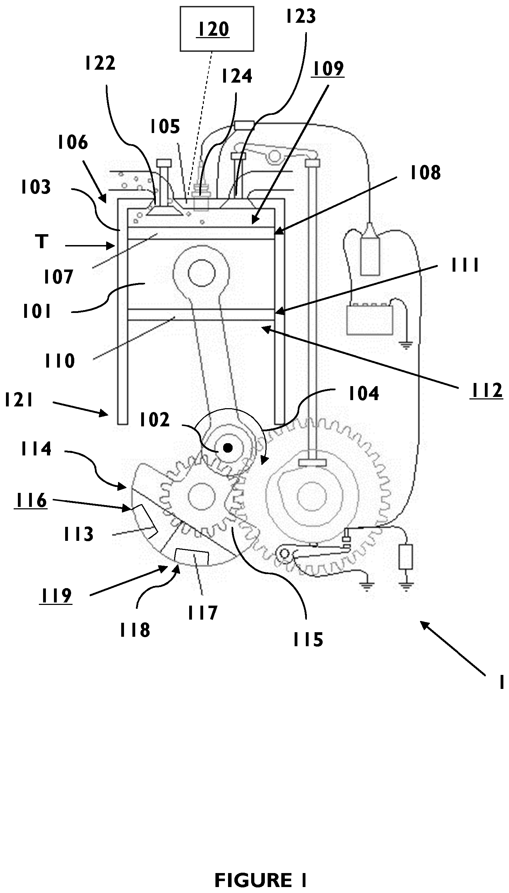

**Figures 1 to 7** show a section through an internal combustion engine 1, and illustrate a piston, cylinder and a crankshaft, along with other features typical of an internal combustion engine. According to this specific illustrated example, internal combustion engine I is a four-stroke engine.

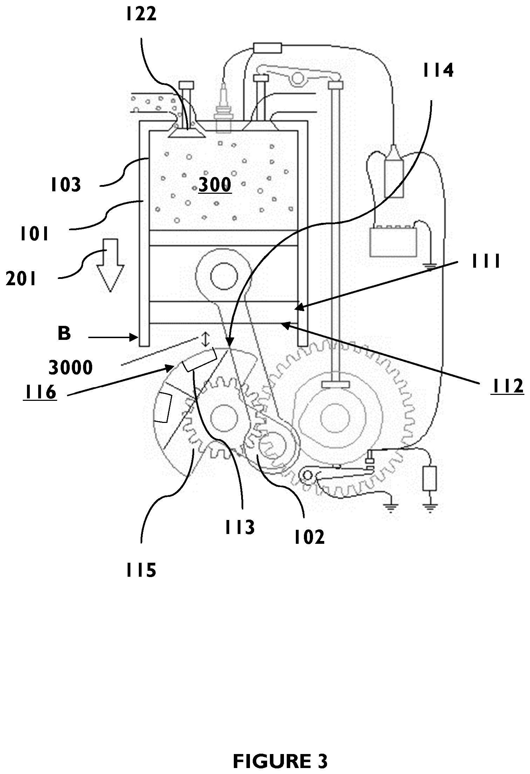

Referring initially to **Figure 1****,** a piston 101 is operatively connected to a crankshaft 102 and is slidable within a cylinder 103 between a top position T (as shown in this Figure) and a bottom position B (as shown in **Figure 3****).** A drive direction of rotation 104 of the crankshaft 102 is indicated.

According to the illustrated specific example, an electromagnet 105 is located at an upper end, indicated at 106, of the cylinder 103. A first permanent magnet 107 is located at an upper end 108 of the piston 101. An upper face 109 of the first permanent magnet 107 faces the electromagnet 105. The upper face 109 of the first permanent magnet 107 has one of a north polarity and a south polarity.

A second permanent magnet 110 is located at a lower end 111 of the piston, opposite the upper end 108. A lower face 112 of the second permanent magnet I 10 has one of a north polarity and a south polarity. In an example, the polarity of the lower face 112 of the second permanent magnet 110 is opposite the polarity of the upper face 109 of the first permanent magnet 107. According to this specific example, the upper face 109 of the first permanent magnet 107 is a south pole and the lower face 112 of the second permanent magnet 110 is a north pole.

A third permanent magnet 113 is located at a first, leading region 114 of a counterweight 115 of the crankshaft 102. An outer face 116 of the third permanent magnet 113 has an opposite one of a north polarity and a south polarity to the lower face 112 of the second permanent magnet 110. Thus, according to this specific example, the outer face 116 of the third permanent magnet 113 is a south pole.

A fourth permanent magnet 117 is located at a second, trailing region 118 of the counterweight 115 of the crankshaft 102. An outer face 119 of the fourth permanent magnet 117 has an opposite one of a north polarity and a south polarity to the outer face 116 of the third permanent magnet 113. Thus, according to this specific example, the outer face 119 of the fourth permanent magnet 117 is a north pole.

The electromagnet 105 operatively is connected to a control arrangement, indicated generally at 120, for selectively activating the electromagnet 105 in at least one of a north polarity mode and a south polarity mode, for repelling the first permanent magnet 107 as the piston 101 approaches the top position within the cylinder 103. A lower end 121 of the cylinder 103 is indicated.

Also shown in **Figure 1** are an intake valve 122, an exhaust valve 123 and a spark plug 124.

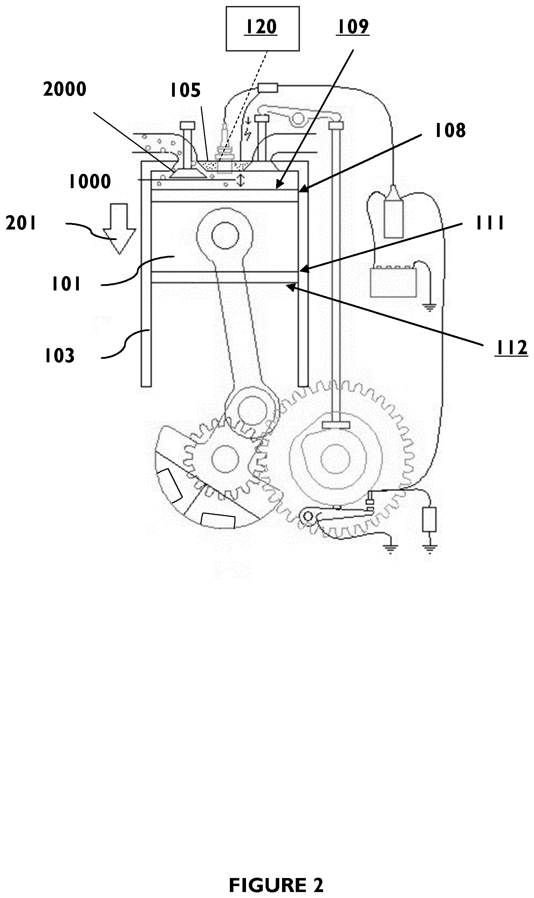

Features of the internal combustion engine 1 in operation will now be described with reference to **Figures 2 to 7****.**

As illustrated in **Figure 2****,** with the piston 101 in the top position within the cylinder 103, the electromagnet 105 is activated, under the operation of the control arrangement 120, to exhibit, according to the first specific example, south polarity, to repel the first permanent magnet 108 of the piston 101. This magnetic repulsion between the electromagnet 105 and the first permanent magnet 108, indicated at 1000, assists the travel of the piston 101 away from the head of the cylinder 101, in the downward direction indicated by arrow 201 towards the bottom position shown in **Figure 3****.**

As the piston 101 moves downwards, a vacuum is formed within the cylinder and fuel 300 is drawn into the cylinder 101 through the intake valve 122, as illustrated at 2000. The fuel 300 may comprise a plurality of constituents, which may include air.

As the piston 101 moves towards the bottom position, the counterweight 115 of the crankshaft 102 rotates towards the second permanent magnet 110 of the piston 101. This brings the outer face 116 of the third permanent magnet 113 of the first, leading region 114 of the counterweight 115, towards the outer face 112 of the second permanent magnet 110 of the piston 101. The outer face 116 of the third permanent magnet 113 has the opposite polarity to the outer face 112 of the second permanent magnet 110 of the piston 101 and attracts the second permanent magnet 110 of the piston 101. This magnetic attraction between the third permanent magnet 113 and the second permanent magnet 110, indicated at 3000, assists the travel of the piston 101 away from the head of the cylinder 101, in the downward direction indicated by arrow 201.

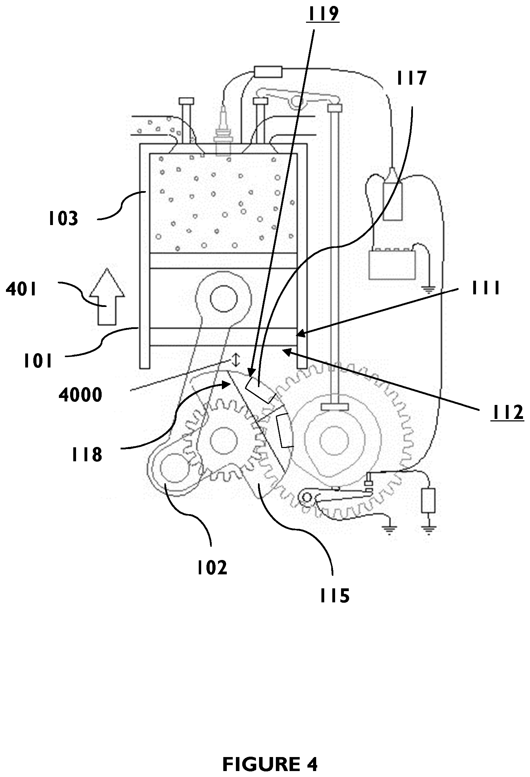

Continued movement of the piston 101 into the bottom position within the cylinder 103 causes the crankshaft 102, and the counterweight 115, to rotate further so that, as shown in **Figure 4****,** the outer face 119 of the fourth permanent magnet 117 of the second, trailing region 118 of the counterweight 115, towards the outer face 112 of the second permanent magnet 110 of the piston 101. The outer face 119 of the fourth permanent magnet 117 has the same polarity as the outer face 112 of the second permanent magnet 110 of the piston 101 and repels the second permanent magnet 110 of the piston 101. This magnetic repulsion between the fourth permanent magnet 117 and the second permanent magnet 110, indicated at 4000, assists the travel of the piston 101 back towards the head of the cylinder 101, in an upward direction indicated by arrow 401.

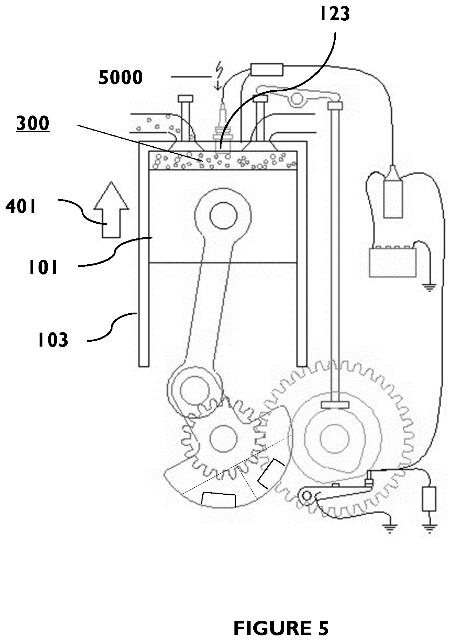

As the piston 101 travels back towards the top position, as shown in **Figure 5****,** with the intake valve 122 and exhaust valve 123 closed, the fuel 300 is compressed. When the piston 101 approaches the top position, the spark plug 124 is activated to ignite the fuel 300, as indicated at 5000, which expands and causes the piston 101 to be thrust back downwards towards the bottom position.

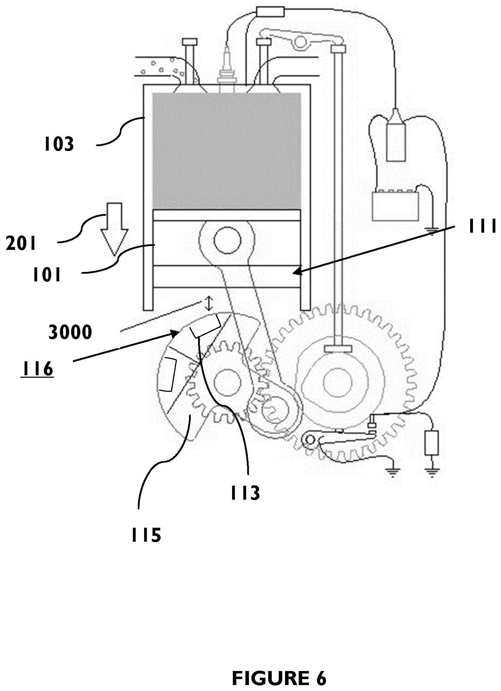

As indicated in **Figure 6****,** once again, as the piston 101 moves towards the bottom position, the counterweight 115 of the crankshaft 102 rotates towards the second permanent magnet 110 of the piston 101, and the third permanent magnet 113 of the counterweight 115 of the crankshaft 102 attracts the second permanent magnet 110 of the piston 101, as indicated at 3000, which assists the travel of the piston 101 away from the head of the cylinder 101, in the downward direction indicated by arrow 201.

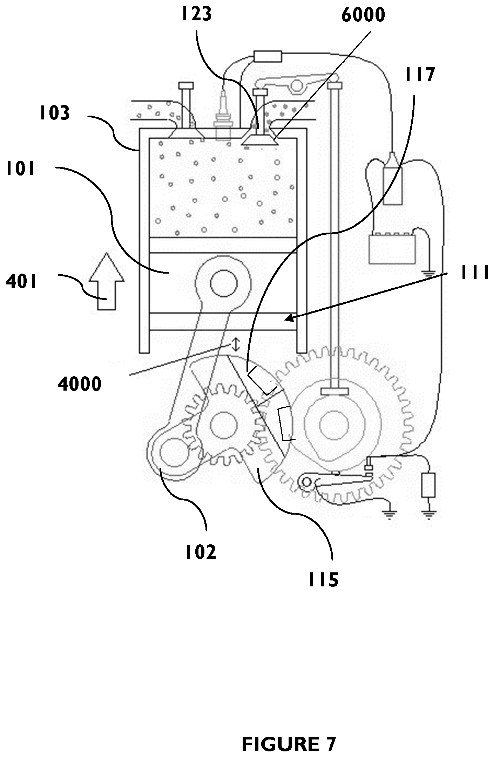

Continued movement of the piston 101 into the bottom position within the cylinder 103 causes the crankshaft 102, and the counterweight 115, to rotate until, as shown in **Figure 7****,** the fourth permanent magnet 117 of the counterweight 115 repels the second permanent magnet 110 of the piston 101, as indicated at 4000, which assists with pushing the piston 101 back towards the head of the cylinder 101, in the upward direction indicated by arrow 401.

As the piston 101 travels back towards the top position, the combusted fuel 300 is exhausted through the exhaust valve 123, as indicated at 7000. The piston 101 then returns to the top position, with the four-stroke cycle completed and ready to start again from the point shown in **Figure 2****.**

Although use of the apparatus has been described used in a four-stroke engine, it may alternatively be used in a two-stroke engine. In an example, the internal combustion is configured to use at least one fuel of: gasoline, bioethanol. In an example, the internal combustion is configured to use at least one fuel of: diesel, biodiesel. The internal combustion engine may be comprised by a hybrid electric engine.

Any suitable vehicle may comprise the internal combustion engine. In an example, the vehicle is an automobile. In a specific example, the automobile is a car.

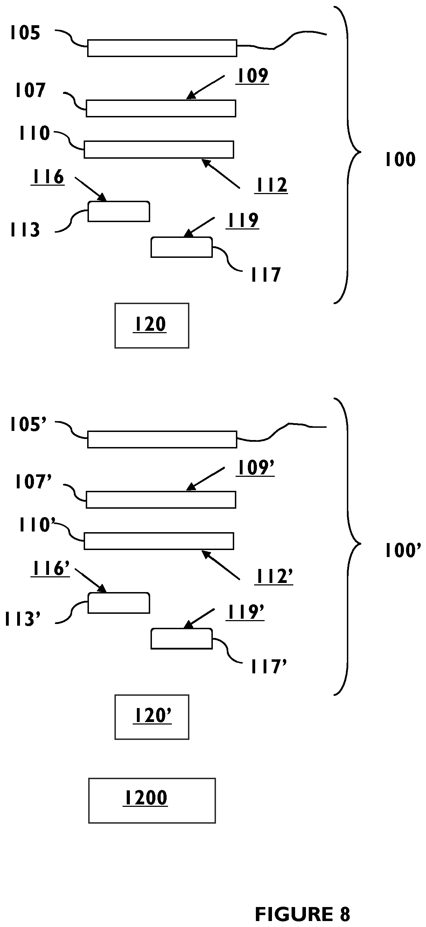

Apparatus 100 for installation within an internal combustion engine, for providing the internal combustion engine 1 of **Figures 1 to 7****,** is shown in **Figure 8****.**

The apparatus 100 comprises: an electromagnet 105 for location at an upper end of a cylinder; a first permanent magnet 107 for location at an upper end of the piston with an upper face 109 of the first permanent magnet facing the electromagnet 105, the upper face having one of a north polarity and a south polarity; a second permanent magnet 110 for location at a lower end of the piston, opposite the upper end, with a lower face 112 of the second permanent magnet facing towards a lower end of the cylinder, opposite the upper end, the lower face having one of a north polarity and a south polarity; a third permanent magnet 113 for location at a first, leading region of a counterweight of the crankshaft, with an outer face 116 of the third permanent magnet arranged for facing the lower end of the piston (and, in turn, the lower face of the first permanent magnet) during rotation of the crankshaft, the outer face of the third permanent magnet having an opposite one of a north polarity and a south polarity to the lower face of the second permanent magnet; and a fourth permanent magnet 117 for location at a second, trailing region of the counterweight of the crankshaft, with an outer face 119 of the fourth permanent magnet arranged for facing the lower end of the piston (and, in turn, the lower face of the first permanent magnet) during rotation of the crankshaft, the outer face of the fourth permanent magnet having an opposite one of a north polarity and a south polarity to the outer face of the third permanent magnet.

The electromagnet 105 is operatively connectable to a control arrangement 120 for selectively activating the electromagnet in at least one of a north polarity mode and a south polarity mode, for, in use, repelling the first permanent magnet as the piston approaches the top position within the cylinder. In this example, the apparatus 100 comprises the control arrangement 120.

The electromagnet 105 may be any suitable type. Each of the first permanent magnet 107, the second permanent magnet 110, the third permanent magnet 113 and the fourth permanent magnet 117 may have any suitable shape, dimensions and strength, and comprise any suitable material. The control arrangement 120 may comprise any suitable componentry, which may comprise at least one of, for example, wiring, a controller, that may comprise, or otherwise have access to, a non-transitory computer-readable medium, with program instructions being stored on the non-transitory computer-readable medium that are executable by the controller to cause the controller to perform each of a plurality of functions, which may comprise an "on" function and an "off" function.

The apparatus 100 may be installable in an internal combustion engine that comprises a plurality of cylinders and respective pistons, each of the plurality of pistons operatively connected to a common crankshaft that comprises a counterweight for each cylinder and respective piston.

In such cases, a further apparatus 100' may then be provided for each further cylinder and respective piston. In an example, the electromagnet 105' of such a further apparatus 100' is operatively connectable to a further control arrangement 120' for selectively activating the electromagnet 105' in at least one of a north polarity mode and a south polarity mode. In an example, the further control arrangement 120' of the further apparatus 100' and the control arrangement 120 of the apparatus 100 are comprised by a centralised control arrangement, indicated at 1200.

A method of providing the internal combustion engine 1, comprises: locating an electromagnet 105 at an upper end of a cylinder in which a piston is slidable between a top position and a bottom position, the piston operatively connected to a crankshaft having a drive direction of rotation; locating a first permanent magnet 107 at an upper end of the piston with an upper face 109 of the first permanent magnet facing the electromagnet, the upper end having one of a north polarity and a south polarity; locating a second permanent magnet I 10 at a lower end of the piston, opposite the upper end, a lower face 112 of the second permanent magnet having one of a north polarity and a south polarity; locating a third permanent magnet 113 at a first, leading region of a counterweight of the crankshaft, an outer face 116 of the third permanent magnet having an opposite one of a north polarity and a south polarity to the lower face of the second permanent magnet; locating a fourth permanent magnet 117 located at a second, trailing region of the counterweight of the crankshaft, an outer face 119 of the fourth permanent magnet having an opposite one of a north polarity and a south polarity to the outer face of the third permanent magnet; and operatively connecting the electromagnet 105 to a control arrangement 120 for selectively activating the electromagnet in at least one of a north polarity mode and a south polarity mode, for repelling the first permanent magnet as the piston approaches the top position within the cylinder.

The apparatus 100 disclosed herein may be retrofit to an internal combustion engine.

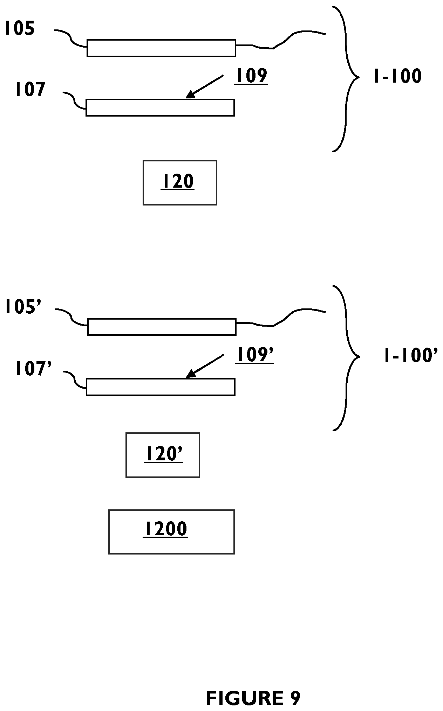

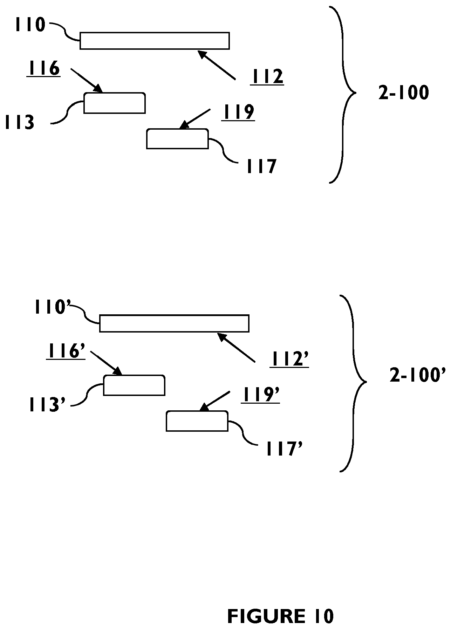

The apparatus 100 described herein, with reference to **Figures 1 to 8****,** comprises apparatus 1-100 described below with reference to **Figure 9** and apparatus 2-100 described below with reference to **Figure 10****.** Apparatus 1-100 and apparatus 2-100 may be used separately, rather than in combination.

Referring now to **Figure 9****,** apparatus 1-100 is suitable for installation within an internal combustion engine that comprises a cylinder in which a piston is slidable between a top position and a bottom position, the piston operatively connected to a crankshaft having a drive direction of rotation, and comprises: an electromagnet 105 locatable at an upper end of the cylinder, and a permanent magnet 107 locatable at an upper end of the piston with an upper face 109 of the permanent magnet facing the electromagnet 105, the upper face having one of a north polarity and a south polarity.

The electromagnet 105 is operatively connectable to a control arrangement 120 for selectively activating the electromagnet in at least one of a north polarity mode and a south polarity mode, for, in use, repelling the first permanent magnet as the piston approaches the top position within the cylinder. In this example, the apparatus 1-100 comprises the control arrangement 120.

The electromagnet 105 may be any suitable type. The permanent magnet 107 may have any suitable shape, dimensions and strength, and comprise any suitable material. The control arrangement 120 may comprise any suitable componentry, which may comprise at least one of, for example, wiring, a controller, that may comprise, or otherwise have access to, a non-transitory computer-readable medium, with program instructions being stored on the non-transitory computer-readable medium that are executable by the controller to cause the controller to perform each of a plurality of functions, which may comprise an "on" function and an "off" function.

Apparatus 1-100 may be installable in an internal combustion engine that comprises a plurality of cylinders and respective pistons, each of the plurality of pistons operatively connected to a common crankshaft that comprises a counterweight for each cylinder and respective piston.

In such cases, a further apparatus 1-100' may then be provided for each further cylinder and respective piston. In an example, the electromagnet 1-105' of such a further apparatus 1-100' is operatively connectable to a further control arrangement 1-120' for selectively activating the electromagnet 1-105' in at least one of a north polarity mode and a south polarity mode. In an example, the further control arrangement 1-120' of the further apparatus 1-100' and the control arrangement 120 of the apparatus 100 are comprised by a centralised control arrangement, indicated at 1200.

A method of installing the apparatus 1-100 within an internal combustion engine, the internal combustion engine comprising a cylinder in which a piston is slidable between a top position and a bottom position, the piston operatively connected to a crankshaft having a drive direction of rotation, comprises: locating the electromagnet 105 at an upper end of the cylinder; locating the permanent magnet 107 at the upper end of the piston with the upper face of the permanent magnet facing the electromagnet 105; and operatively connecting electromagnet 105 to control arrangement 120 for selectively activating the electromagnet 105 in at least one of a north polarity mode and a south polarity mode, for repelling the permanent magnet 107 as the piston approaches the top position within the cylinder.

Apparatus 1-100 may be installed within an internal combustion engine of a vehicle, for example an automobile.

Referring now to **Figure 10****,** apparatus 2-100 is suitable for installation within an internal combustion engine that comprises a cylinder in which a piston is slidable between a top position and a bottom position, the piston operatively connected to a crankshaft having a drive direction of rotation, and comprises: a first permanent magnet I 10 locatable at a lower end of the piston, with a lower face 112 of the first permanent magnet facing towards a lower end of the cylinder, the lower face having one of a north polarity and a south polarity, a second permanent magnet 113 locatable at a first, leading region of a counterweight of the crankshaft, with an outer face 116 of the second permanent magnet 113 arranged for facing the lower end of the piston (and, in turn, the lower face of the first permanent magnet) during rotation of the crankshaft, the outer face of the second permanent magnet having an opposite one of a north polarity and a south polarity to the lower face of the first permanent magnet, and a third permanent magnet 117 locatable at a second, trailing region of the counterweight of the crankshaft, with an outer face 119 of the third permanent magnet 117 arranged for facing the lower end of the piston (and, in turn, the lower face of the first permanent magnet) during rotation of the crankshaft, the outer face of the third permanent magnet having an opposite one of a north polarity and a south polarity to the outer face of the second permanent magnet.

Each of the first permanent magnet 110, the second permanent magnet 113 and the third permanent magnet 117 may have any suitable shape, dimensions and strength, and comprise any suitable material.

Apparatus 2-100 may be installable in an internal combustion engine that comprises a plurality of cylinders and respective pistons, each of the plurality of pistons operatively connected to a common crankshaft that comprises a counterweight for each cylinder and respective piston. In such a case, a further apparatus 2-100' may then be provided for each further cylinder and respective piston.

A method of installing the apparatus 2-100 within an internal combustion engine, the internal combustion engine comprising a cylinder in which a piston is slidable between a top position and a bottom position, the piston operatively connected to a crankshaft having a drive direction of rotation, comprises: locating the first permanent magnet 110 at a lower end of the piston, with the lower face 112 of the first permanent magnet facing towards a lower end of the cylinder; locating the second permanent magnet 113 at a first, leading region of a counterweight of the crankshaft for attracting the first permanent magnet; and locating the third permanent magnet 117 at a second, trailing region of the counterweight of the crankshaft for repelling the first permanent magnet.

Apparatus 2-100 may be installed within an internal combustion engine of a vehicle, for example an automobile.

The apparatus 1-100 and the apparatus 2-100 may both be installed within an internal combustion engine at the same time, or at different times, in any order. Each of the apparatus 1-100 and the apparatus 2-100 may be installed within the same internal combustion engine as an original or retrofit installation.

Apparatus disclosed herein may be installed in an internal combustion engine, with one or more components thereof replacing material within the internal combustion engine. It is to be understood that the electromagnet or a permanent magnet being located at a particular location may involve the electromagnet or permanent magnet being located on a part of the internal combustion engine or being incorporated within that part. The electromagnet or a permanent magnet being located at a particular location may add to, or be encompassed by, the normal dimensions of a part of the internal combustion engine.

The apparatus disclosed herein utilises magnetic fields to assist travel of the piston within the cylinder and, in turn, improve fuel efficiency. The apparatus advantageously uses well-understood technology that has a minimal impact on overall weight when incorporated into an internal combustion engine.

Although illustrative embodiments of the invention have been disclosed in detail herein, with reference to the accompanying drawings, it is to be understood that the invention is not limited to the precise embodiments and examples shown and that various changes and modifications can be effected therein by one skilled in the art without departing from the scope of the invention as defined by the appended claims.

## Claims

1. An internal combustion engine (1), comprising:
a cylinder (103),
a piston (101) slidable within the cylinder (103) between a top position and a bottom position, and
a crankshaft (102) having a drive direction of rotation, the piston (101) operatively connected to the crankshaft (102);
the internal combustion engine (1) further comprising:
(a) a first permanent magnet (110) located at a lower end (111) of the piston (101), with a lower face (112) of the first permanent magnet (110) facing towards a lower end (121) of the cylinder (103), the lower face (112) of the first permanent magnet (110) having one of a north polarity and a south polarity;
(b) a second permanent magnet (113) located at a first, leading region (114) of a counterweight (115) of the crankshaft (102) for attracting the first permanent magnet 110), an outer face (116) of the second permanent magnet (113) having an opposite one of a north polarity and a south polarity to the lower face (112) of the first permanent magnet (110); and
(c) a third permanent magnet (117) located at a second, trailing region (118) of the counterweight (115) of the crankshaft (102) for repelling the second permanent magnet (113), an outer face (119) of the third permanent magnet (117) having an opposite one of a north polarity and a south polarity to the outer face (116) of the second permanent magnet (113).

2. An internal combustion engine (1) as claimed in claim 1, the internal combustion engine (1) further comprising:
(d) an electromagnet (105) located at an upper end (106) of the cylinder (103);
(e) a fourth permanent magnet (107) located at an upper end (108) of the piston (101), an upper face (109) of the fourth permanent magnet (107) facing the electromagnet (105) and having one of a north polarity and a south polarity; and
(f) a control arrangement (120) operatively connected to the electromagnet (105) for selectively activating the electromagnet (105) in at least one of a north polarity mode and a south polarity mode, for repelling the fourth permanent magnet (107) as the piston (101) approaches the top position within the cylinder (103).

3. An internal combustion engine (1) as claimed in claim 2, the lower face (112) of the first permanent magnet (110) having an opposite one of a north polarity and a south polarity to the upper face (109) of the fourth permanent magnet (107).

4. An internal combustion engine (1) as claimed in claim 2 or claim 3, comprising:
at least one further cylinder (103') and respective further piston (101'), the further piston (101') operatively connected to the crankshaft (102) and slidable within the further cylinder (103') between a top position and a bottom position;
the internal combustion engine (1) further comprising:
(g) a second electromagnet (105') located at an upper end (106') of the further cylinder (103');
(h) a fifth permanent magnet (107') located at an upper end (108') of the further piston (101'), an upper face (109') of the fifth permanent magnet (107') facing the second electromagnet (105') and having one of a north polarity and a south polarity;
(i) a sixth permanent magnet (110') located at a lower end of the further piston (101'), opposite the upper end (108') of the further piston (101'), a lower face (112') of the sixth permanent magnet (110') having one of a north polarity and a south polarity;
(j) a seventh permanent magnet (113') located at a first, leading region (114') of a respective further counterweight (115') of the crankshaft (102), an outer face (116') of the seventh permanent magnet (113') having an opposite one of a north polarity and a south polarity to the lower face (112') of the sixth permanent magnet (110'); and
(k) an eighth permanent magnet (117') located at a second, trailing region (118') of the further counterweight (115') of the crankshaft (102), an outer face (119') of the eighth permanent magnet (117') having an opposite one of a north polarity and a south polarity to the outer face of the seventh permanent magnet (113'); in which
(l) the second electromagnet (105') is operatively connected to a second control arrangement (120') for selectively activating the second electromagnet (105') in at least one of a north polarity mode and a south polarity mode, for repelling the fifth permanent magnet as the further piston (101') approaches the top position within the further cylinder (103').

5. An internal combustion engine (1) as claimed in claim 4, wherein the second control arrangement (120') and the control arrangement (120) are comprised by a centralised control arrangement (1200).

6. An internal combustion engine (1) as claimed in claim 4 or claim 5, the lower face (112') of the sixth permanent magnet (110') having an opposite one of a north polarity and a south polarity to the upper face (109') of the fifth permanent magnet (107').

7. An internal combustion engine (1) as claimed in claim 6 when dependent upon claim 3, the upper face (109') of the fifth permanent magnet (107) having the same one of a north polarity and a south polarity as the upper face (109) of the fourth permanent magnet (107).

8. An internal combustion engine (1) as claimed in any one of claims 1 to 7, wherein the internal combustion engine (1) is one of: a four-stroke engine, a two-stroke engine.

9. An internal combustion engine (1) as claimed in any one of claims 1 to 8, configured to use a fuel (300) that is or comprises one of: gasoline, bioethanol, diesel, biodiesel.

10. A vehicle, wherein the vehicle comprises an internal combustion engine (1) as claimed in any one of claims 1 to 9.

11. A vehicle as claimed in claim 10, wherein the vehicle is an automobile.

12. Apparatus (100) for installation within an internal combustion engine for providing an internal combustion engine (1) as claimed in claim 1, the apparatus (100) comprising:
(a) a first permanent magnet (110) for location at a lower end (111) of a piston (101) of the internal combustion engine, the piston (101) slidable within a cylinder (103) of the internal combustion engine between a top position and a bottom position and the piston (101) operatively connected to a crankshaft (102) of the internal combustion engine, the crankshaft (102) having a drive direction of rotation (104), with a lower face (112) of the first permanent magnet (110) facing towards a lower end (121) of the cylinder (103), the lower face (112) of the first permanent magnet (110) having one of a north polarity and a south polarity;
(b) a second permanent magnet (113) for location at a first, leading region (114) of a counterweight (115) of the crankshaft (102) for attracting the first permanent magnet 110), an outer face (116) of the second permanent magnet (113) having an opposite one of a north polarity and a south polarity to the lower face (112) of the first permanent magnet (110); and
(c) a third permanent magnet (117) for location at a second, trailing region (118) of the counterweight (115) of the crankshaft (102) for repelling the second permanent magnet (113), an outer face (119) of the third permanent magnet (117) having an opposite one of a north polarity and a south polarity to the outer face (116) of the second permanent magnet (113).

13. Apparatus (100) for installation within an internal combustion engine for providing an internal combustion engine (1) as claimed in claim 2, comprising the apparatus (100) of claim 12 and further comprising:
(d) an electromagnet (105) for location at an upper end (106) of the cylinder (103);
(e) a fourth permanent magnet (107) for location at an upper end (108) of the piston (101), an upper face (109) of the fourth permanent magnet (107) facing the electromagnet (105) and having one of a north polarity and a south polarity; and
(f) a control arrangement (120) operatively connected to the electromagnet (105) for selectively activating the electromagnet (105) in at least one of a north polarity mode and a south polarity mode, for repelling the fourth permanent magnet (107) as the piston (101) approaches the top position within the cylinder (103).

14. A method of installing apparatus (100) within an internal combustion engine, the internal combustion engine (1) comprising a cylinder (103) in which a piston (101) is slidable between a top position and a bottom position, the piston (101) operatively connected to a crankshaft (102) having a drive direction of rotation (104), the method comprising:
(i) locating a first permanent magnet (110) at a lower end (111) of the piston (101), with a lower face (112) of the first permanent magnet (110) facing towards a lower end (121) of the cylinder (103), the lower face (112) of the first permanent magnet (110) having one of a north polarity and a south polarity;
(ii) locating a second permanent magnet (113) at a first, leading region (114) of a counterweight (115) of the crankshaft (102) for attracting the first permanent magnet 110), an outer face (116) of the second permanent magnet (113) having an opposite one of a north polarity and a south polarity to the lower face (112) of the first permanent magnet (110); and
(iii) locating a third permanent magnet (117) at a second, trailing region (118) of the counterweight (115) of the crankshaft (102) for repelling the second permanent magnet (113), an outer face (119) of the third permanent magnet (117) having an opposite one of a north polarity and a south polarity to the outer face (116) of the second permanent magnet (113).

15. The method of claim 14, further comprising:
(iv) locating an electromagnet (105) at an upper end (106) of the cylinder (101);
(v) locating a fourth permanent magnet (107) at an upper end (108) of the piston (101) with an upper face (109) of the fourth permanent magnet (107) facing the electromagnet (105), the upper end (109) of the fourth permanent magnet (107) having one of a north polarity and a south polarity; and
(vi) operatively connecting the electromagnet (105) to a control arrangement (120), the control arrangement (120) for selectively activating the electromagnet (105) in at least one of a north polarity mode and a south polarity mode, for repelling the fourth permanent magnet (107) as the piston (101) approaches the top position within the cylinder (103).
